# EUROPEAN PATENT SPECIFICATION

(11) **EP 3 608 937 B1**
(45) Date of publication and mention of the grant of the patent: **08.06.2022**
(21) Application number: 18201056.1
(22) Date of filing: 17.10.2018
(51) Int. Cl.: H01H 13/705, H01H 13/88

(54) **KEYBOARD, ELECTRONIC DEVICE AND ASSEMBLY METHOD OF THE KEYBOARD**
TASTATUR, ELEKTRONISCHE VORRICHTUNG UND MONTAGEVERFAHREN DER TASTATUR
CLAVIER, DISPOSITIF ÉLECTRONIQUE ET PROCÉDÉ D'ASSEMBLAGE DU CLAVIER

(30) Priority: 07.08.2018 TW 107127448
(43) Date of publication of application: 12.02.2020
(73) Proprietor: Acer Incorporated, New Taipei City 221 (TW)
(72) Inventor: CHEN, Hung-Chi, New Taipei City 221, (TW); CHUANG, Huei-Ting, New Taipei City 221, (TW); CHEN, Shun-Bin, New Taipei City 221, (TW)
(74) Representative: Haseltine Lake Kempner LLP

(56) References cited:
- TW-U- M 560 619
- US-A- 5 898 145
- US-A1- 2010 032 272

## Description

### BACKGROUND

### Technical Field

The present invention relates to a keyboard, an electronic device, and a keyboard assembly method, and more particularly to a keyboard, an electronic device, and a keyboard assembly method that can save an assembly process.

### Description of Related Art

The conventional film is that the keyboard is first attached to the thin film circuit board by an individual process, and then the keycaps are assembled to the resetting member and the scissors feet.

For the assembler, the assembly of the keycap to the resetting member and the scissor foot requires more attention on the alignment, so as to prevent that the keycap is well assembled to the resetting member but is not assembled align with the scissor foot, or the keycap and the scissor foot are well assembled but the resetting member is not aligned. Therefore, the assembly of the keyboard is quite troublesome for the assembler.

US 5898145 discloses a computer key having a base plate, a membrane circuit, a foil sheet, a biasing member, a push button, and first and second linking frames, which work in a scissor like manner.

### SUMMARY

The present invention provides a keyboard according to claim 1 that facilitates replacement of a keycap.

The present invention provides an electronic device according to claim 5 having convenient of use.

The present invention provides a method of assembling a keyboard according to claim 6 that can reduce an assembly process.

The keyboard of the present invention includes a thin film circuit board and a plurality of buttons. The thin film circuit board has a plurality of membrane switches, the buttons are disposed correspond to the membrane switch, and each of the buttons includes a keycap and a scissor foot. The keycap is used to be pressed to cause the corresponding membrane switch to be turned on, wherein the keycap comprises a cap body and a resetting member, wherein the cap body is formed with the resetting member as an integral, and the scissor foot is connected between the keycap and the thin film circuit board. No component is disposed between the resetting member and the scissor foot along a pressing direction in which the keycap is intended to be pressed.

In an embodiment of the invention, the cap body and the resetting member are assembled as an integral, wherein the cap body has an assembly flange, the resetting member has an assembly groove, and the assembly flange and the assembly groove are engaged with each other.

In an embodiment of the invention, the cap body and the resetting member are formed as an integral by double injection or insert molding.

The electronic device of the present invention includes a display, a keyboard as described above, and a host, wherein the display and the keyboard are electrically connected to the host.

The assembling method of the keyboard of the present invention comprises at least the following steps: providing a thin film circuit board, wherein the thin film circuit board has a plurality of film membrane switches; providing a plurality of scissors feet, and disposing the scissors feet corresponding to the membrane switch on the thin film circuit board; and providing a plurality of keycaps, each of which includes a cap body and a resetting member formed as an integral, and the keycap is assembled to the corresponding scissor foot in accordance with to the membrane switch.

In an embodiment of the invention, an assembly flange is formed on an inner surface of the cap body, an assembly groove is formed on an outer edge of the resetting member, and the assembly flange and the assembly groove are engage with each other, so as to assemble the cap body and the resetting member as an integral.

In an embodiment of the invention, the cap body and the resetting member are formed as an integral by double injection or insert molding.

In an embodiment of the invention, a robotic arm is used to synchronously assemble the keycaps onto the corresponding scissor feet.

Based on the above, in the assembling method of the keyboard of the present invention, the cap body and the resetting member of the keycap are first assembled into an integral and then all the keycaps are possible to synchronize assembled onto the scissors feet using the robotic arm in a same step. The assembly process can be reduced compared to conventional ones.

For the detecting person or the end user, since the cap body and the resetting member of the keycap are formed as an integral in the keyboard of the present invention and the electronic device using the same, so that the broken keycaps can be easily replaced at any time according to requirements.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of a keyboard according to an embodiment of the present invention.
FIG. 2 is a partial exploded diagram of the keyboard of FIG. 1.
FIG. 3 is a schematic diagram of a keycap of the button of FIG. 1.
FIG. 4 is a schematic diagram of the cap body.
FIG. 5 is a schematic diagram of a method of assembling the keyboard of FIG. 1.
FIG. 6 is a schematic diagram of an electronic device of the present invention.
FIG. 7 is a schematic diagram of a keyboard application on a notebook computer.

### DESCRIPTION OF THE EMBODIMENTS

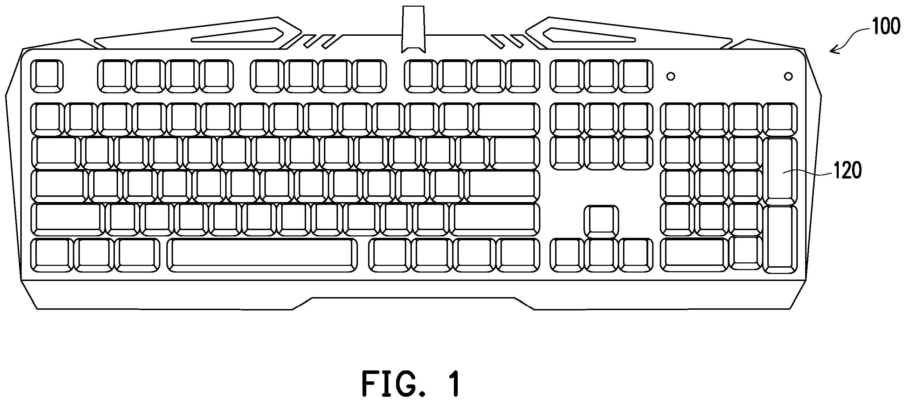

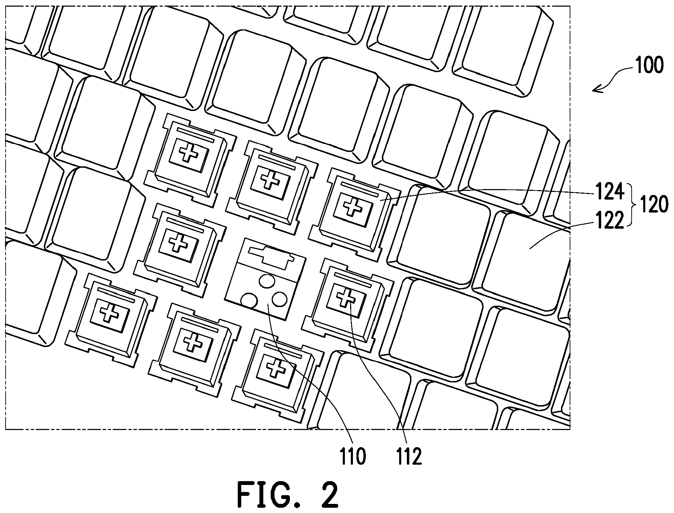

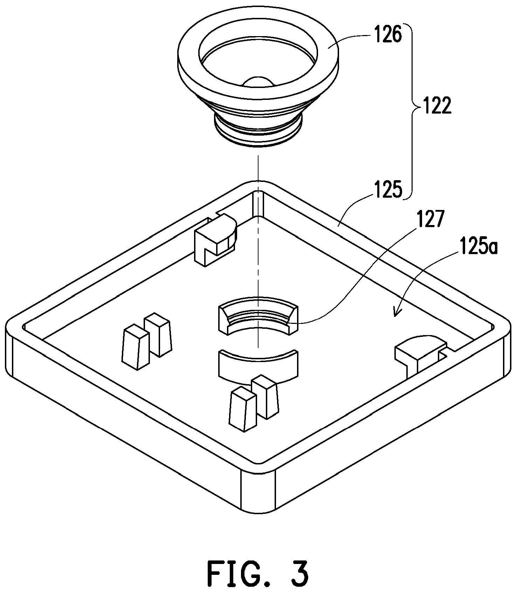

FIG.1 is a schematic diagram of a keyboard according to an embodiment of the present invention, FIG. 2 is a partially exploded diagram of the keyboard of FIG. 1, and FIG. 3 is a schematic diagram of a keycap of the button of FIG 1. Referring to FIG. 1, FIG. 2 and FIG. 3 simultaneously, the keyboard 100 includes a thin film circuit board 110 and a plurality of buttons 120. The thin film circuit board 110 has a plurality of membrane switches 112, the buttons 120 are disposed corresponding to the membrane switches 112, and each of the buttons 120 includes a keycap 122 and a scissor foot 124. The keycap 122 is used to be pressed to cause the corresponding membrane switch 112 to be turned on. The keycap 122 includes a cap body 125 and a resetting member 126, wherein the cap body 125 and the resetting member 126 are formed as an integral, and the scissor foot 124 is connected between the keycap 122 and the thin film circuit board 110.

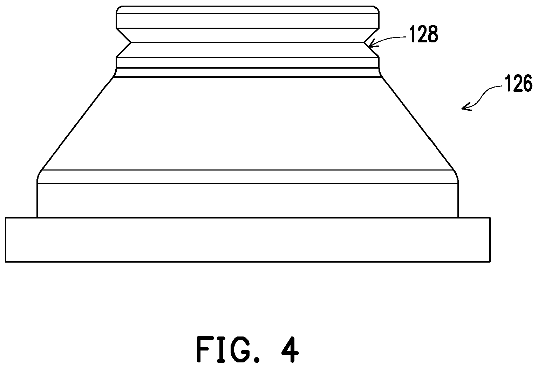

FIG.4 is a schematic view of the cap body. Referring to FIG. 3 and FIG. 4 simultaneously, in the present embodiment, the cap body 125 has a set of assembly flanges 127, and the resetting member 126 has a set of assembly grooves 128, thereby engaging the assembly grooves 128 with the assembly flanges 127 for assembling the cap body 125 and the resetting member 126 as an integral.

In another embodiment, the cap body 125 and the resetting member 126 can be formed into an integral by double injection or insert molding.

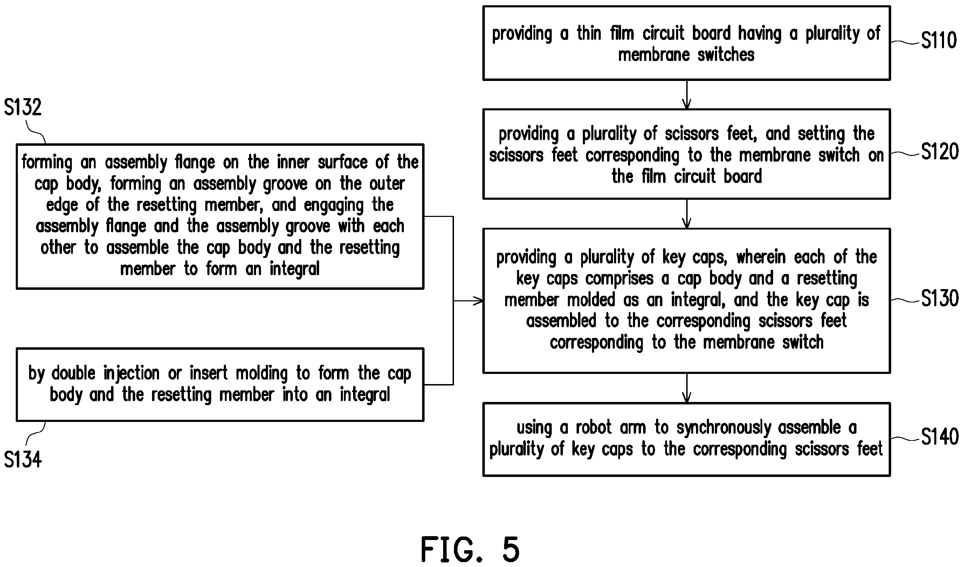

In particular, since the cap body 125 and the resetting member 126 are integrally formed in the present embodiment, the assembly method of the keyboard 100 of the present embodiment is also different from the conventional one. FIG. 5 is a schematic diagram of a method of assembling the keyboard of FIG. 1. Referring to FIG. 2, FIG. 3 and FIG. 5, in detail, the assembling method of the keyboard 100 of the embodiment includes at least the following steps: in step S110, a thin film circuit board 110 is provided, wherein the thin film circuit board 110 has a plurality of membrane switches 112. In step S120, a plurality of scissor feet 124 are provided, and the scissor feet 124 are disposed on the thin film circuit board 110 corresponding to the membrane switch 112. In step S130, a plurality of keycaps 122 are provided, wherein each of the keycaps 122 includes a cap body 125 and a resetting member 126 formed as an integral, and the keycap 122 is assembled onto the corresponding scissor foot 124 in accordance with the membrane switch 112.

In step S130, each of the keycaps 122 includes a cap body 125 and a resetting member 126 that are formed as an integral, and further in step S132, an assembly flange 127 is formed on an inner surface 125a of the cap body 125, an assembly groove 128 is formed on an outer edge of the resetting member 126, and the assembly flange 127 and the assembly groove 128 are engaged with each other to assemble the cap body 125 and the resetting member 126 as an integral.

Alternatively, as in step S134, the cap body 125 and the resetting member 126 are formed as an integral by double injection or insert molding.

Thereafter, as in step S140, a robotic arm (not shown) is used to synchronously assemble the plurality of keycaps 122 onto the corresponding scissor feet 124.

Compared with the conventional keyboard assembly method, since the resetting members and the scissor feet are all disposed on the thin film circuit board, the keycap needs to be aligned with the resetting member and the scissor foot at the same time, so that the keycap can be well assembled to the resetting member and the scissor foot, so the keycap can be turned on when it is touched. If the keycap is aligned with the resetting member but is not aligned with the scissor foot, the user feels the elastic deformation of the resetting member after the assembled keycap is pressed, and triggers the membrane switch, but lacking the function of the scissors foot that allowing the resetting member to move in a balance and smoothly manner. Otherwise, if the keycap is aligned with the scissor foot but not aligned with the resetting member, the assembled keycap is not restored to an original position after being pressed since the resetting member does not provide elastic restoring force. Therefore, for the assembler, it is particularly laborious and difficult when assembling the keycap to the resetting member and the scissor foot, and the parts are too many for automatically assemble through the robotic arm.

In contrast, the cap body 125 and the resetting member 126 of the present embodiment have been formed as an integral in advance, so that when the keycap 122 is assembled to the scissor foot 124, only the cap body 125 and the scissor foot 124 need to be paired. Therefore, the keycap 122 can be easily assembled to the thin film circuit board 110 for the assembler. Moreover, since the alignment assembly process is less complicated, a program can be designed for automatically assembling the keycap 122 onto the thin film circuit board 110 by the robotic arm, and all the keycaps 122 of one keyboard 100 are synchronously assembled onto the thin film circuit board 110. In this way, the assembler can do other work that requires more manpower.

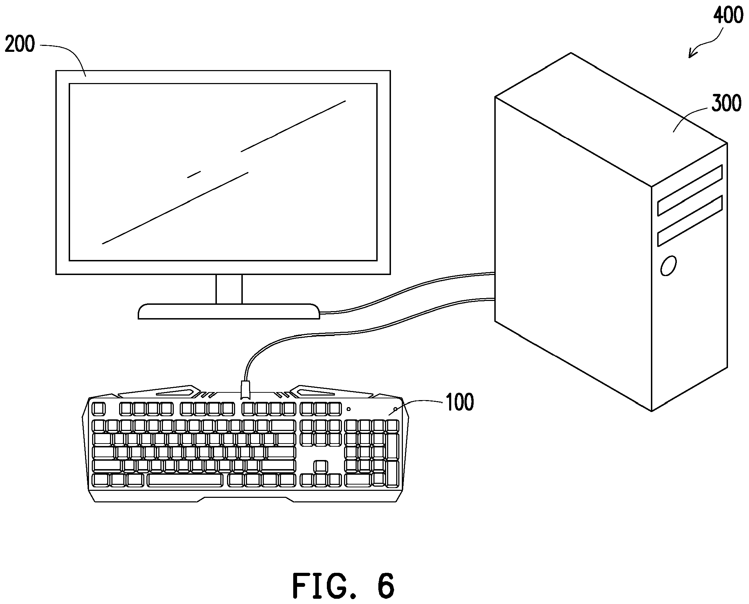

FIG. 6 is a schematic diagram of an electronic device of the present invention. The aforementioned keyboard 100 is applied to an electronic device 400. The electronic device 400 is, for example, a desktop computer. The electronic device 400 includes a display 200, the keyboard 100, and a host 300. The display 200 and the keyboard 100 are both electrically connected to the host 300.

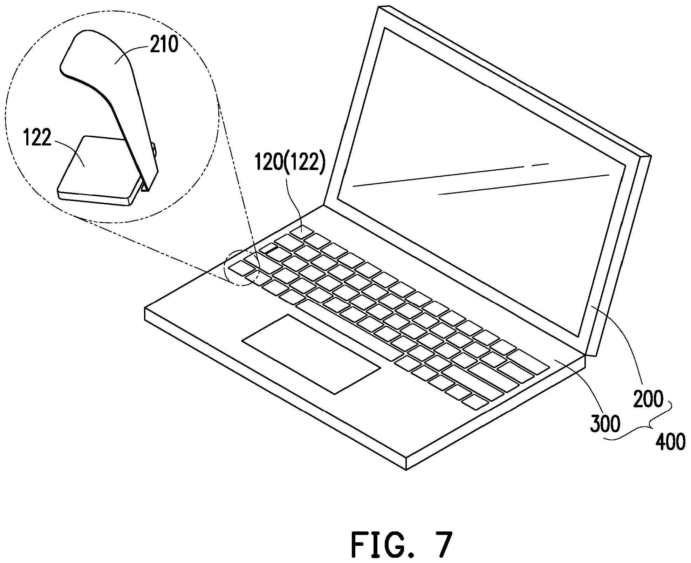

FIG. 7 is a schematic diagram of a keyboard application on a notebook computer. Referring to FIG. 7, the aforementioned keyboard 100 can also be applied to a notebook computer. Since the keyboard of the current notebook computer has a single button which is broken, the entire group needs to be replaced, or even the entire computer needs to be replaced, so that the user spends a considerable amount of cost. Since the keyboard 100 of the embodiment is applied in a notebook computer, the user can replace the individually damaged button 120 only. Alternatively, it is also possible to replace the frequently used individual button 120 with a type that meets the hand feeling according to the user's use requirements. Therefore, for the end user, the keyboard 100 of the present invention can meet the needs of individual users.

In addition, the keycap 122 can be removed by an assistance of a hand tool 210 since the keyboard in the notebook computer is arranged closely.

In summary, in the assembling method of the keyboard of the present invention, the cap body and the resetting member of the keycap are formed or assembled as an integral, so that all the key caps are assembled synchronously to the scissors feet in the same step using the robotic arm. Compared with conventional assembling method, the assembly process can be reduced and is more suitable for automated assembly.

In addition, in the keyboard of the present invention and the electronic device using the same, since the cap body and the resetting member of the keycap are formed as an integral, the broken keycap can be easily replaced individually at any time according to requirements, so it is convenient for the detecting personnel or the end user.

## Claims

1. A keyboard (100), comprising:
a thin film circuit board (110) having a plurality of membrane switches (112);
a plurality of buttons (120), disposed corresponding to the membrane switches (112), and each of the buttons (120) comprising:
a keycap (122), for being pressed to cause the corresponding membrane switch (112) to be turned on, wherein the keycap (122) includes a cap body (125) and a resetting member (126), wherein the cap body (125) is formed with the resetting member (126) as an integral;
a scissor foot (124), coupled between the keycap (122) and the thin film circuit board (110); wherein no component is disposed between the resetting member (126) and the scissor foot (124) along a pressing direction in which the keycap (122) is intended to be pressed.

2. The keyboard (100) of claim 1, wherein the cap body (125) and the resetting member (126) are assembled to be an integral.

3. The keyboard (100) of claims 1 or 2, wherein the cap body (125) has an assembly flange (127), and the resetting member (126) has an assembly groove (128), and the assembly flange (127) and the assembly groove (128) are engaged with each other.

4. The keyboard (100) of claim 1, wherein the cap body (125) and the resetting member (126) are integrally molded by double injection or insert molding.

5. An electronic device (400), comprising:
a display (200);
a keyboard (100) as disclosed in any one of claims 1 to 4; and
a host (300), wherein the display (200) and the keyboard (100) are electrically connected to the host (300).

6. A method of assembling a keyboard (100), comprising:
providing a thin film circuit board (110), wherein the thin film circuit board (110) has a plurality of membrane switches (112) (S110);
providing a plurality of scissor feet (124) and placing the scissor feet (124) on the thin film circuit board (110) corresponding to the membrane switches (112) (S120); and
providing a plurality of keycaps (122), and assembling (S130) each of the keycaps (122) onto a corresponding one of the scissor feet (124) in accordance with the membrane switches (112), wherein a cap body (125) and a resetting member (126) of each of the keycaps (122) are formed as an integral, before the keycaps (122) are assembled to the scissor feet (124); wherein no component is disposed between the resetting member (126) and the scissor foot along a pressing direction in which the keycap (122) is intended to be pressed.

7. The method of assembling a keyboard (100) according to claim 6, wherein the cap body (125) and the resetting member (126) are assembled as an integral (S132).

8. The method of assembling a keyboard (100) according to claims 6 or 7, wherein an assembly flange (127) is formed on an inner surface (125a) of the cap body (125), an assembly groove (128) is formed on an outer edge of the resetting member (126), and the assembly flange (127) and the assembly groove (128) are engaged with each other (S132).

9. The method of assembling a keyboard (100) according to claim 6, wherein the cap body (125) and the resetting member (126) are formed as an integral by double injection or insert molding (S134).

10. The method of assembling a keyboard (100) according to any one of claims 6 to 9, wherein a robotic arm is used to synchronously assemble the keycaps (122) to the corresponding scissor feet (124) (S140).

## Patentansprüche

1. Tastatur (100), umfassend:
eine Dünnfilm-Leiterplatte (110), die eine Vielzahl von Membranschaltern (112) aufweist;
eine Vielzahl von Tasten (120), die entsprechend den Membranschaltern (112) angeordnet sind, und
jede der Tasten (120) umfassend:
eine Tastenkappe (122), die gedrückt wird, um zu bewirken, dass der entsprechende Membranschalter (112) eingeschaltet wird, wobei die Tastenkappe (122) einen Kappenkörper (125) und ein Rückstellelement (126) beinhaltet, wobei der Kappenkörper (125) mit dem Rückstellelement (126) zu einem Ganzen gebildet ist;
einen Scherenfuß (124), der zwischen der Tastenkappe (122) und der Dünnfilm-Leiterplatte (110) gekoppelt ist; wobei keine Komponente zwischen dem Rückstellelement (126) und dem Scherenfuß (124) entlang einer Druckrichtung angeordnet ist, in der die Tastenkappe (122) gedrückt werden soll.

2. Tastatur (100) gemäß Anspruch 1, wobei der Kappenkörper (125) und das Rückstellelement (126) zu einem Ganzen montiert sind.

3. Tastatur (100) gemäß Anspruch 1 oder 2, wobei der Kappenkörper (125) einen Montageflansch (127) aufweist und das Rückstellelement (126) eine Montagenut (128) aufweist und der Montageflansch (127) und die Montagenut (128) miteinander in Eingriff sind.

4. Tastatur (100) gemäß Anspruch 1, wobei der Kappenkörper (125) und das Rückstellelement (126) durch Doppelspritzguss oder Umspritzen zu einem Ganzen geformt sind.

5. Elektronische Vorrichtung (400), umfassend:
eine Anzeige (200);
eine Tastatur (100), wie sie in einem der Ansprüche 1 bis 4 offenbart ist; und
einen Host (300), wobei die Anzeige (200) und die Tastatur (100) elektrisch mit dem Host (300) verbunden sind.

6. Verfahren zum Montieren einer Tastatur (100), umfassend:
Bereitstellen einer Dünnfilm-Leiterplatte (110), wobei die Dünnfilm-Leiterplatte (110) eine Vielzahl von Membranschaltern (112) (S110) aufweist;
Bereitstellen einer Vielzahl von Scherenfüßen (124) und Platzieren der Scherenfüße (124) auf der Dünnschicht-Leiterplatte (110) entsprechend den Membranschaltern (112) (S120); und
Bereitstellen einer Vielzahl von Tastenkappen (122) und Montieren (S130) jeder der Tastenkappen (122) auf einen entsprechenden der Scherenfüße (124) in Übereinstimmung mit den Membranschaltern (112), wobei ein Kappenkörper (125) und ein Rückstellelement (126) von jeder der Tastenkappen (122) als ein Ganzes gebildet sind, bevor die Tastenkappen (122) an den Scherenfüßen (124) montiert werden; wobei
keine Komponente zwischen dem Rückstellelement (126) und dem Scherenfuß entlang einer Druckrichtung angeordnet ist, in der die Tastenkappe (122) gedrückt werden soll.

7. Verfahren zum Montieren einer Tastatur (100) gemäß Anspruch 6, wobei der Kappenkörper (125) und das Rückstellelement (126) als ein Ganzes (S132) montiert werden.

8. Verfahren zum Montieren einer Tastatur (100) gemäß Anspruch 6 oder 7, wobei ein Montageflansch (127) an einer Innenfläche (125a) des Kappenkörpers (125) gebildet ist, eine Montagenut (128) an einer Außenkante des Rückstellelements (126) gebildet ist und der Montageflansch (127) und die Montagenut (128) in Eingriff miteinander (S132) sind.

9. Verfahren zum Montieren einer Tastatur (100) gemäß Anspruch 6, wobei der Kappenkörper (125) und das Rückstellelement (126) durch Doppelspritzguss oder Umspritzen (S134) als ein Ganzes gebildet sind.

10. Verfahren zum Montieren einer Tastatur (100) gemäß einem der Ansprüche 6 bis 9, wobei ein Roboterarm zum synchronen Montieren der Tastenkappen (122) an den entsprechenden Scherenfüßen (124) (S140) verwendet wird.

## Revendications

1. Un clavier (100), comprenant:
une carte de circuit à film mince (110) ayant une pluralité de commutateurs à membrane (112) ;
une pluralité de boutons (120), disposés en correspondance avec les commutateurs à membrane (112), et chacun des boutons (120) comprenant :
un capuchon de touche (122), destiné à être pressé pour amener le commutateur à membrane correspondant (112) à être activé, dans lequel le capuchon de touche (122) comprend un corps de capuchon (125) et un élément de rappel (126), dans lequel le corps de capuchon (125) est formé avec l'élément de rappel (126) comme une seule pièce ;
un pied en ciseaux (124), couplé entre le capuchon de touche (122) et la carte de circuit à film mince (110) ; dans lequel aucun composant n'est disposé entre l'élément de rappel (126) et le pied en ciseaux (124) le long d'une direction de pression dans laquelle le capuchon de touche (122) est destiné à être pressé.

2. Le clavier (100) selon la revendication 1, dans lequel le corps de capuchon (125) et l'élément de rappel (126) sont assemblés pour former une seule pièce.

3. Le clavier (100) selon les revendications 1 ou 2, dans lequel le corps de capuchon (125) a une bride d'assemblage (127), et l'élément de rappel (126) a une rainure d'assemblage (128), et la bride d'assemblage (127) et la rainure d'assemblage (128) sont engagées l'une avec l'autre.

4. Le clavier (100) selon la revendication 1, dans lequel le corps de capuchon (125) et l'élément de rappel (126) sont intégralement moulés par double injection ou moulage par insertion.

5. Un dispositif électronique (400), comprenant :
un affichage (200) ;
un clavier (100) comme décrit selon l'une quelconque des revendications 1 à 4; et
un hôte (300), dans lequel l'affichage (200) et le clavier (100) sont connectés électriquement à l'hôte (300).

6. Un procédé d'assemblage d'un clavier (100), comprenant :
la fourniture d'une carte de circuit à film mince (110), dans laquelle la carte de circuit à film mince (110) a une pluralité de commutateurs à membrane (112) (S110);
la fourniture d'une pluralité de pieds en ciseaux (124) et le placement des pieds en ciseaux (124) sur la carte de circuit à film mince (110) correspondant aux commutateurs à membrane (112) (S120) ; et
la fourniture d'une pluralité de capuchons de touches (122), et l'assemblage (S130) de chacun des capuchons de touches (122) sur l'un correspondant des pieds en ciseaux (124) en fonction des commutateurs à membrane (112), dans lequel un corps de capuchon (125) et un élément de rappel (126) de chacun des capuchons de touches (122) sont formés comme une seule pièce, avant que les capuchons de touches (122) soient assemblés aux pieds en ciseaux (124) ; dans lequel aucun composant n'est disposé entre l'élément de rappel (126) et le pied en ciseaux le long d'une direction de pression dans laquelle le capuchon de touche (122) est destiné à être pressé.

7. Le procédé d'assemblage d'un clavier (100) selon la revendication 6, dans lequel le corps de capuchon (125) et l'élément de rappel (126) sont assemblés comme une seule pièce (S132).

8. Le procédé d'assemblage d'un clavier (100) selon l'une quelconque des revendications 6 ou 7, dans lequel une bride d'assemblage (127) est formée sur une surface interne (125a) du corps de capuchon (125), une rainure d'assemblage (128) est formée sur un bord externe de l'élément de rappel (126), et la bride d'assemblage (127) et la rainure d'assemblage (128) sont engagées l'une avec l'autre (S132).

9. Le procédé d'assemblage d'un clavier (100) selon la revendication 6, dans lequel le corps de capuchon (125) et l'élément de rappel (126) sont formés comme une seule pièce par double injection ou moulage par insertion (S134).

10. Le procédé d'assemblage d'un clavier (100) selon l'une quelconque des revendications 6 à 9, dans lequel un bras robotique est utilisé pour assembler de manière synchrone les capuchons de touches (122) aux pieds de ciseaux correspondants (124) (S140).
